(19)

Europäisches
Patentamt
European
Patent Office
Office européen
des brevets

(11)  **EP 3 269 544 A1**

(12)  **EUROPEAN PATENT APPLICATION**
published in accordance with Art. 153(4) EPC

(43) Date of publication:
**17.01.2018 Bulletin 2018/03**

(21) Application number: **16761766.1**

(22) Date of filing: **08.03.2016**

(51) Int Cl.:
**B32B 9/00** *(2006.01)*    **B32B 5/22** *(2006.01)*
**H01M 2/16** *(2006.01)*

(86) International application number:
**PCT/JP2016/057223**

(87) International publication number:
**WO 2016/143798 (15.09.2016 Gazette 2016/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority:  **12.03.2015  JP 2015049811**

(71) Applicants:
• **JNC Corporation**
  **Chiyoda-ku**
  **Tokyo 100-8105 (JP)**
• **JNC Petrochemical Corporation**
  **Tokyo 100-0004 (JP)**

(72) Inventors:
• **SAKAMOTO Kazuyuki**
  **Ichihara-shi**
  **Chiba 290-8551 (JP)**
• **FUKUDA Hirokazu**
  **Ichihara-shi**
  **Chiba 290-8551 (JP)**
• **ENOKI Nobuo**
  **Ichihara-shi**
  **Chiba 290-8551 (JP)**
• **ITOU Shingo**
  **Ichihara-shi**
  **Chiba 290-8551 (JP)**

(74) Representative: **Becker Kurig Straus**
  **Patentanwälte**
  **Bavariastrasse 7**
  **80336 München (DE)**

(54)  **ORGANIC-INORGANIC COMPOSITE FILM, AND MULTI-LAYER HEAT RESISTANT SEPARATOR MATERIAL USING SAME**

(57)    The present invention addresses the problem of providing an organic-inorganic composite film that is useful as a separator material, while being lightweight, providing cohesion between the base material film and the heat resistant layer, and allowing the micropore characteristics of the base material film to be retained. The problem is addressed by an organic-inorganic composite film characterized in that a heat-resistant layer that contains inorganic heat resistant particles and a binder is provided on at least one surface of a base material film comprising a polyolefin microporous film, said organic-inorganic composite film satisfying all of the following conditions (A), (b), and (C): Condition (A): $a \leq 1.5$ (a: density of heat resistant layer $(g/m^2/\mu m)$, condition (B): $12.74 \leq b$ (b: peel strength (N) of base material film and heat resistant layer), condition (C): $c \leq 20$ (c: represents the percentage change in air permeability (%) calculated from the following equation. Percentage change in air permeability (%) = |(air permeability of organic-inorganic composite film) - (air permeability of base material film)| ÷ (air permeability of base material film) $\times$ 100).

**EP 3 269 544 A1**

**Description**

**Technical Field**

The present invention relates to an organic-inorganic composite film, a method of producing the same, and a multilayer heat-resistant separator material using the organic-inorganic composite film.

**Background Art**

As a microporous film which is a material of a battery separator, there is a film which is made of a resin such as polyethylene and polypropylene and has micropores made by a method such as a wet method or a dry method. With the increasing demand for safety and heat resistance in batteries in recent years, an organic-inorganic composite film in which a heat-resistant layer containing inorganic heat-resistant particles is provided on a microporous resin film has been used as a multilayer heat-resistant separator material. Such a multilayer heat-resistant separator material increases heat resistance and thus contributes to increasing the safety of batteries. However, practically, there are problems specific to the organic-inorganic composite film.
First, a weight per unit length of the separator material is high. Since the heat-resistant layer contains a large amount of metal oxides such as alumina and silica, a density thereof is much higher than a density of a microporous film (hereinafter referred to as a base material film) made of a resin which is a base material. Although the thickness of the heat-resistant layer is small, a weight per unit length of a separator increases consistently due to the provision of the heat-resistant layer. This has not been favorable for lightweight batteries of recent years.
Second, the ion conductivity of the base material film may be influenced by the heat-resistant layer. In general, the heat-resistant layer is formed by applying a heat-resistant layer agent containing inorganic heat-resistant particles, a binder, and a solvent to the base material film, and performing drying and solidification. When the heat-resistant layer adheres to a surface of the base material film and a portion close to the surface, the shape of voids penetrating the microporous film may change. Therefore, in the multilayer heat-resistant separator material including the heat-resistant layer and the base material film, there is a possibility that the excellent ion conductivity inherent in the base material film is not being maintained.
Third, it is difficult for the base material film and the heat-resistant layer to firmly adhere to each other. The affinity between a filler used as inorganic heat-resistant particles and the base material film made of, for example, a polyolefin, is low. Therefore, in order to adhere the filler such as a metal oxide and the base material film made of, for example, a polyolefin, a binder having appropriate affinity for both of the inorganic heat-resistant particles and the base material film is blended into the heat-resistant layer. However, there is a limit to bonding strength between the inorganic heat-resistant particles, the binder, and the base material film. In addition, in order to obtain high heat resistance, it is necessary for the inorganic heat-resistant particles to be dispersed at a sufficient concentration in the heat-resistant layer. However, it is difficult to uniformly disperse a large amount of inorganic heat-resistant particles in the binder. Therefore, there is a limit to firmly adhere the binder containing a large amount of inorganic heat-resistant particles and the base material film.
An organic-inorganic composite film which can address all of the above problems, that is, an organic-inorganic composite film having excellent balance among lightweightness, maintaining micropore characteristics of a base material film, and favorable adhesion between a base material and a heat-resistant layer has not yet been obtained.

[Citation List]

[Patent Literature]

Patent Literature 1: PCT International Publication No. WO 2014/030507 pamphlet
Patent Literature 2: PCT International Publication No. WO 2012/124093 pamphlet
Patent Literature 3: Japanese Unexamined Patent Application Publication No. 2013-163806
Patent Literature 4: PCT International Publication No. WO 2012/029699 pamphlet
Patent Literature 5: Japanese Unexamined Patent Application Publication No. 2013-14017

For example, in Patent Literature 1 to 5, a multilayer film which is used for a battery separator and includes a base material film and a heat-resistant layer is described. In Patent Literature 1 and 2, adhesion of the heat-resistant layer is described, but the density of the heat-resistant layer, weight reduction of the multilayer film, and maintaining micropore characteristics of the base material film are not described. In Patent Literature 3 and 4, they are focused on the peel strength of the heat-resistant layer, and change in air permeability of the base material film, but weight reduction of the multilayer film is not described. In Patent Literature 5, weight reduction of the multilayer film is described, but maintaining micropore characteristics of the base material film and adhesion between the base material and the heat-resistant layer are not described. In this manner, sufficient research regarding a lightweight separator material which maintains micropore characteristics of a base material film and has adhesion between a base material and a heat-resistant layer, has not yet been performed.

**Summary of Invention**

[Technical Problem]

Here, the inventors of the present invention conducted extensive research to obtain an organic-inorganic composite film for a multilayer heat-resistant separator material which has excellent balance among lightweightness, maintaining micropore characteristics of a base material film and favorable adhesion between a base material and a heat-resistant layer.

[Solution to Problem]

Regarding results thereof, when specific conditions are set, selective production of an organic-inorganic composite film with excellent balance is successful.
That is, the present invention is as follows.

[1] An organic-inorganic composite film in which a heat-resistant layer containing inorganic heat-resistant particles and a binder is provided on at least one surface of a base material film formed of a polyolefin microporous film and which satisfies all of the following conditions (A), (B), and (C).

Condition (A): $a \leq 1.5$
(In the relation, a denotes a density of a heat-resistant layer and is represented by a weight per volume ($g/m^2/\mu m$) of a heat-resistant layer with an area of 1 $m^2$ and a thickness of 1 $\mu m$);
Condition (B): $12.74 \leq b$
(In the relation, b denotes a peel strength (N) between a base material film and a heat-resistant layer obtained by the following measurement method.
Method of measuring the peel strength b: the following procedures (1), (2), (3), and (4) are performed in this order:

(1) A double-sided adhesive tape is attached to a heat-resistant layer of an organic-inorganic composite film
(2) Kraft paper is attached to a surface that is not adhered to the heat-resistant layer of the double-sided adhesive tape
(3) Ends of the organic-inorganic composite film and the kraft paper are interposed between chucks of a tensile tester
(4) The chucks of the tensile tester are pulled apart at a tensile rate of 500 mm/min and a maximum stress (N) at which the heat-resistant layer and the base material film are separated at the interface is set as the peel strength b);

Condition (C): $c \leq 20$
(In the relation, c denotes a percentage change in air permeability (%) obtained by the following formula:

$$\text{percentage change in air permeability (\%)} = |(\text{air permeability of organic-inorganic composite film}) - (\text{air permeability of base material film})| \div (\text{air permeability of base material film}) \times 100)$$

[2] The organic-inorganic composite film according to [1],
wherein the polyolefin microporous film is a polymer obtained by polymerizing monomers including olefins as a main constituent.
[3] The organic-inorganic composite film according to [2],

wherein the polymer obtained by polymerizing monomers including olefins as a main constituent is a propylene homopolymer or a polymer which is obtained by copolymerizing propylene and at least one selected from among ethylene and $\alpha$-olefins having 4 to 8 carbon atoms and which includes propylene as a main component.

[4] The organic-inorganic composite film according to any one of [1] to [3],

wherein the inorganic heat-resistant particles are an inorganic filler having an average particle size of 0.2 $\mu$m or less.

[5] The organic-inorganic composite film according to [4],

wherein the inorganic filler is at least one selected from among silica, boehmite, and alumina.

[6] The organic-inorganic composite film according to any one of [1] to [5],

wherein the binder is a fluorine-containing resin.

[7] A method of producing the organic-inorganic composite film according to any one of [1] to [6], including a process of applying a heat-resistant layer agent containing inorganic heat-resistant particles and a binder to at least one surface of a base material film formed of a polyolefin microporous film and then drying and solidifying the heat-resistant layer.

[8] A multilayer heat-resistant separator material including the organic-inorganic composite film according to any one of [1] to [6].

[Advantageous Effects of Invention]

The organic-inorganic composite film of the present invention has high heat resistance and is lighter than those of the related art. Moreover, adhesion between a base material film and a heat-resistant layer is favorable. Furthermore, micropore characteristics of the base material film are well maintained during contact with the heat-resistant layer. Up to now, there have been no attempts to selectively produce such an organic-inorganic composite film and it is not possible to find an application example of such an organic-inorganic composite film. Therefore, the organic-inorganic composite film of the present invention is novel because it has heat resistance, is lightweight, and has favorable adhesion between the base material film and the heat-resistant layer, and maintains microporosity of the base material film, and is progressive because it has new advantages that were not an objective in conventional products.

**Description of Embodiments**

An organic-inorganic composite film of the present invention in which a heat-resistant layer containing inorganic heat-resistant particles and a binder is provided on at least one surface of a base material film formed of a polyolefin microporous film and which satisfies all of the following conditions (A), (B), and (C).

Condition (A): a$\leq$1.5

(In the relation, a denotes a density of a heat-resistant layer and is represented by a weight per volume (g/m$^2$/$\mu$m) of a heat-resistant layer with an area of 1 m$^2$ and a thickness of 1 $\mu$m);

Condition (B): 12.74$\leq$b

(In the relation, b denotes a peel strength (N) between a base material film and a heat-resistant layer obtained by the following measurement method.

The method of measuring the peel strength b: the following procedures (1), (2), (3), and (4) are performed in this order.

(1) A double-sided adhesive tape is attached to a heat-resistant layer of an organic-inorganic composite film.

(2) Kraft paper is attached to a surface that is not adhered to the heat-resistant layer of the double-sided adhesive tape.

(3) Ends of the organic-inorganic composite film and the kraft paper are interposed between chucks of a tensile tester.

(4) The chucks of the tensile tester are pulled apart at a tensile rate of 500 mm/min and a maximum stress (N) when the heat-resistant layer and the base material film are separated at the interface is set as the peel strength b);

Condition (C): c$\leq$20

(In the relation, c denotes a percentage change in air permeability (%) obtained by the following formula.

percentage change in air permeability (%)=|(air permeability of organic-inorganic composite film)-(air permeability of base material film)|÷(air permeability of base material film)×100).

[Base material film]

The base material film used in the present invention is a polyolefin microporous film. A polyolefin which is a raw material of the base material film used in the present invention is a polymer obtained by polymerizing monomers including olefins as a main constituent. The polyolefin may be a polymer obtained by performing polymerization with the inclusion of a monomer other than an olefin monomer even if it is a polymer obtained by polymerizing mainly olefin monomers as long as it includes olefin monomers as a main constituent, that is, the olefin monomers are a main component. As the olefin monomer, a linear olefin monomer having 2 to 10 carbon atoms and a branched olefin monomer having 4 to 8 carbon atoms such as 2-methylpropene, 3-methyl-1-butene, and 4-methyl-1-pentene can be used. As the other monomer, styrenes and dienes can be used in combination. Representative polyolefins are polymers called polyethylene or polypropylene. Polyethylene is a polymer including ethylene as a main component. For example, an ethylene homopolymer and a polymer which is obtained by copolymerizing ethylene and at least one (comonomer) selected from $\alpha$-olefins having 3 to 8 carbon atoms and which includes ethylene as a main component may be exemplified. Polypropylene is a polymer including propylene as a main component. For example, a propylene homopolymer, and a polymer which is obtained by copolymerizing propylene, ethylene, and at least one (comonomer) selected from $\alpha$-olefins having 4 to 8 carbon atoms and which includes propylene as a main component may be exemplified. The content of the above comonomer may be in any range as long as the base material film satisfies a predetermined elongation condition.

The base material film used in the present invention may be any film as long as the organic-inorganic composite film of the present invention satisfies the above conditions (A), (B), and (C). A raw material of the base material film used in the present invention is preferably highly crystalline polypropylene with a high melting point. A particularly preferable polypropylene has a melt mass flow rate (MFR, measured under conditions according to JIS K6758 (230 °C, 21.18 N)) of 0.1 to 1.0 g/10 min and a melting point of 150 to 170 °C.

As the polyolefin which is a raw material of the base material film used in the present invention, highly crystalline polypropylene with a high melting point is preferable. A particularly preferable polypropylene is a polymer which has a melt mass flow rate (MFR, measured under conditions according to JIS K6758 (230 °C, 21.18 N)) of 0.1 to 1.0 g/10 min and a melting point of 150 to 170 °C, which may optionally include at least one selected from among ethylene and $\alpha$-olefins having 4 to 8 carbon atoms, and which includes propylene as a main component.

An additive such as a crystal nucleating agent and a filler can be blended into the above polyolefin. A type and an amount of the additive are not limited as long as the organic-inorganic composite film of the present invention satisfies the above conditions (A), (B), and (C).

[Production of base material film]

As the base material film of the present invention, a polyolefin microporous film produced by a so-called dry method, which is advantageous in terms of cost because no organic solvent is used, is preferable. As such a polyolefin microporous film, a microporous film which is produced by the following dry method including a film forming process, a heat treatment process, a cold stretching process, a hot stretching process, and a relaxation process and which has a porosity of 45% or more is particularly preferable.

(Film forming process)

In this process, a raw material is extruded and molded to form an initial film. A polyolefin raw material is supplied to an extruder, the polyolefin raw material is melt-kneaded at a temperature of a melting point thereof or higher, and a film made of the polyolefin raw material is extruded from a die attached to the tip of the extruder. The extruder used is not limited. As the extruder, for example, any of a single screw extruder, a two-screw extruder, and a tandem extruder can be used. As the die used, any die that is used for forming a film can be used. As the die, for example, various T type dies can be used. The thickness and the shape of the initial film are not particularly limited. A ratio (draft ratio) between the die slip clearance and the thickness of the initial film is preferably 100 or more and more preferably 150 or more. The thickness of the initial film is preferably 10 to 200 $\mu$m, and more preferably 15 to 100 $\mu$m.

(Heat treatment process)

In this process, the initial film on which the film forming process has been completed is heated. A constant tension is applied to the initial film in the length direction at a temperature 5 to 65 °C lower than and preferably 10 to 25 °C lower than the melting point of the polyolefin raw material. A preferable tension is a tension at which the length of the initial film becomes more than 1.0 times and 1.1 times or less the original length.

(Cold stretching process)

In this process, the initial film on which the heat treatment process has been completed is stretched at a relatively low temperature. The stretching temperature is -5 °C to 45 °C, and preferably 5 °C to 30 °C. The stretch ratio in the length direction is 1.0 to 1.1, preferably 1.00 to 1.08, and more preferably 1.02 or more and less than 1.05. However, the stretch ratio is greater than 1.0 times. The stretching method is not limited. Known methods such as a roll stretching method and a tenter stretching method can be used. The number of stretching steps can be arbitrarily set. One stretching step may be performed or two or more stretching steps may be performed through a plurality of rollers. In the cold stretching process, molecules of the polypropylene polymer constituting the initial film are oriented. As a result, a stretched film including a lamella part with dense molecular chains and a region (craze) with sparse molecular chains between lamellae is obtained.

(Hot stretching process)

In this process, the stretched film on which the cold stretching process has been completed is stretched at a relatively high temperature. The stretching temperature is a temperature 5 to 65 °C lower than the melting point of the polypropylene polymer and is preferably a temperature 10 to 45 °C lower than the melting point of the polyolefin raw material polymer. The stretch ratio in the length direction is 1.5 to 4.5 times, and preferably 2.0 to 4.0 times. The stretching method is not limited. Known methods such as a roll stretching method and a tenter stretching method can be used. The number of stretching steps can be arbitrarily set. One stretching step may be performed or two or more stretching steps may be performed through a plurality of rollers. In the hot stretching process, the craze generated in the cold stretching process is elongated and pores are generated in the stretched film as a result.

(Relaxation process)

In this process, in order to prevent the stretched film on which the hot stretching process has been completed from shrinking, the film is relaxed. The relaxation temperature is a temperature slightly higher than the stretching temperature in the hot stretching process and is generally a temperature 0 to 20 °C higher than the stretching temperature. The degree of relaxation is adjusted so that the length of the stretched film on which the process 4 has been completed finally becomes 0.7 to 1.0 times the original length. Thus, the base material film used in the present invention is completed. The thickness of the final base material film is 15 to 30 $\mu$m, and preferably 15 to 25 $\mu$m.

[Heat-resistant layer]

An inorganic heat-resistant layer is formed on at least one surface of the above base material film. The inorganic heat-resistant layer is formed by applying a heat-resistant layer agent containing inorganic heat-resistant particles, a binder, and a solvent to the base material film and drying and solidifying a coating solution.

(Inorganic heat-resistant particles)

As the inorganic heat-resistant particles, an electrochemically stable inorganic substance having a high melting point and a high insulation ability can be used. Such inorganic heat-resistant particles are inorganic particles generally called an inorganic filler which have a melting point of 200 °C or more. The average particle size of the inorganic heat-resistant particles used in the present invention is 0.2 $\mu$m or less and preferably 0.15 $\mu$m or less. In the present invention, as the inorganic heat-resistant particles, metal oxides such as alumina, silica, titania, zirconia, magnesia, and barium titanate, metal hydroxides such as aluminum hydroxide and magnesium hydroxide, and clay minerals such as boehmite, talc, kaolin, zeolite, apatite, halloysite, pyrophyllite, montmorillonite, sericite, mica, amesite, bentonite, calcium silicate, and magnesium silicate are used. A mixture including a plurality of inorganic heat-resistant particles can be used. Preferable inorganic heat-resistant particles are at least one selected from among alumina, silica, and boehmite.

(Binder)

The binder functions as a binding agent between the base material and the inorganic heat-resistant particles. As the binder, various resins such as a polyolefin, a fluorine-containing resin, rubber, an elastomer, celluloses, and a water-soluble resin can be used. Among them, a binder is preferably polytetrafluoroethylene (PTFE), ethylene-tetrafluoroethylene (ETFE), polyvinyl fluoride (PVF), polychlorotrifluoroethylene (CTFE), and polyvinylidene fluoride (PVDF) or a fluorine-containing resin which is a copolymer thereof, and more preferably polyvinylidene fluoride (PVDF) and a copolymer thereof.

An amount ratio between the inorganic heat-resistant particles and the binder (inorganic heat-resistant particles : binder, weight ratio) is generally in a range of 40:60 to 98:2, preferably 50:50 to 95:5, and more preferably 60:40 to 90:10. Generally, a solvent is added to the inorganic heat-resistant layer agent. As the solvent, a polar organic solvent such as water or acetone, N-methylpyrrolidone, dimethylacetamide, dimethylformamide, or dimethylsulfoxide can be used. In addition to the inorganic heat-resistant particles and the binder, additives such as a dispersant, an antimicrobial agent, and a fungicide can be blended into the above inorganic heat-resistant layer agent as necessary.

(Preparation of heat-resistant layer agent)

Raw materials such as the inorganic heat-resistant particles, the binder, the solvent, and the additive described above are mixed and stirred to prepare an inorganic heat-resistant layer agent. The mixing and stirring methods are not limited as long as the inorganic heat-resistant particles are uniformly dispersed in the inorganic heat-resistant layer agent. In general, a homogenizer, a bead mill, and a jet mill are used.

[Production of organic-inorganic composite film]

The heat-resistant layer agent is applied to at least one surface of the base material film. The application device is not limited. Any device that applies a liquid material in a flat film form can be used, for example, a gravure coater, a micro gravure coater, a die coater, and a knife coater. Then, the base material film to which the heat-resistant layer agent is applied is conveyed into a dryer, the heat-resistant layer agent is dried, and a heat-resistant layer is formed. The drying temperature is a temperature at which the solvent in the heat-resistant layer agent volatilizes, but thermal deterioration of the base material film is prevented. A preferable drying temperature is 70 °C or more, and a more preferable drying temperature is 80 to 120 °C. Due to the drying, the heat-resistant layer agent is solidified and the heat-resistant layer is completed. The thickness of the heat-resistant layer agent provided on one surface of the base material film is generally in a range of 1 to 10 $\mu$m, preferably 1.5 to 6.0 $\mu$m, and more preferably 2.5 to 5.0 $\mu$m.

[Organic-inorganic composite film]

The organic-inorganic composite film of the present invention is an organic-inorganic composite film in which the base material film and the heat-resistant layer agent obtained in the above condition are used, and the heat-resistant layer is provided on at least one surface of the base material film by the above method, and which satisfies the following conditions (A), (B), and (C). Therefore, the base material film, the composition of the heat-resistant layer agent, the thickness of the heat-resistant layer, and a combination of the heat-resistant layer and the base material film are selected so that the finally obtained organic-inorganic composite film satisfies the conditions (A), (B), and (C).

[Condition (A)]

The heat-resistant layer of the present invention satisfies the following condition (A).

Condition (A) a$\leq$1.5

(In the relation, a denotes a density of a heat-resistant layer and is represented by a weight per volume (g/m$^2$/$\mu$m) of a heat-resistant layer with an area of 1 m$^2$ and a thickness of 1 $\mu$m)
Preferably a$\leq$1.4, and more preferably a$\leq$1.3.

[Condition (B)]

The heat-resistant layer of the present invention satisfies the following condition (B).

Condition (B) 12.74≤b

(In the relation, b denotes a peel strength (N) between a base material film and a heat-resistant layer obtained by the following measurement method.

The method of measuring the peel strength b: the following procedures (1), (2), (3), and (4) are performed in this order.

(1) A double-sided adhesive tape is attached to a heat-resistant layer of an organic-inorganic composite film.
(2) Kraft paper is attached to a surface that is not adhered to the heat-resistant layer of the double-sided adhesive tape.
(3) Ends of the organic-inorganic composite film and the kraft paper are interposed between chucks of a tensile tester.
(4) The chucks of the tensile tester are pulled apart at a tensile rate of 500 mm/min and a maximum stress (N) when the heat-resistant layer and the base material film are separated at the interface is set as the peel strength b)

Preferably 14.7≤b, more preferably 24.5≤b, and most preferably 29.4≤b.

[Condition (C)]

The heat-resistant layer of the present invention satisfies the following condition (C).

Condition (C) c≤20

(In the relation, c denotes a percentage change in air permeability (%) obtained by the following formula.

$$\text{percentage change in air permeability } (\%)=|(\text{air permeability of organic-inorganic composite film})-(\text{air permeability of base material film})|\div(\text{air permeability of base material film})\times100).$$

When c is 0%, this means that the air permeability indicated by the base material film alone is not changed by the formation of the heat-resistant layer. This indicates that micropore characteristics of the base material film can be expected to be maintained in the organic-inorganic composite film.

Preferably c≤15 and more preferably c≤10.

The completed organic-inorganic composite film is generally produced as an original roll in which a film having a length of several tens of meters to several thousands of meters is wound on one winding core. When the organic-inorganic composite film of the present invention is processed as a separator, as necessary, the organic-inorganic composite film is cut into a width suitable for the separator to be used, and then wound on a new winding core to produce a product roll. Then, the roll of the organic-inorganic composite film is packaged, stored, and shipped and processed as a desired product.

When the organic-inorganic composite film of the present invention is used as a heat-resistant multilayer separator, it is desirable that the organic-inorganic composite film have higher heat resistance. When the heat resistance of the separator material is evaluated according to a heat shrinkage ratio (%) at 150 °C used in the following example, the heat shrinkage ratio of the organic-inorganic composite film of the present invention is 10% or less. A heat shrinkage ratio of this degree is in an allowable range for a separator material.

**Examples**

[Example 1]

(Production of base material film)

(Raw material) As a raw material, a propylene homopolymer having a melt mass flow rate (MFR) measured according to JIS K6758 (230 °C, 21.18 N) of 0.5 g/10 min and a melting point of 165 °C was used.

(Film formation) The raw material melt-kneaded in a single-screw extruder was extruded from a T die at a draft ratio of 206 to produce an initial film.

(Heat treatment) The initial film was cold-stretched to 1.03 times in the length direction at 30 °C.

(Hot stretching) The obtained stretched film was hot-stretched to 2.8 times in the length direction at 230 °C.

(Relaxation) The obtained stretched film was relaxed so that the length became about 90% of the original length.

Thus, a base material film having a thickness of 20 $\mu$m was obtained. The air permeability of the obtained base material film was 240 sec/100 ml.

(Preparation of heat-resistant layer agent)

As inorganic heat-resistant particles, silica (AEROSIL MOX80, average particle size of 0.1 $\mu$m) was used. As a binder, a vinylidene fluoride copolymer (abbreviated to "co-PVDF") (Kyner 2801 commercially available from Arkema) was used. The inorganic heat-resistant particles (weight concentration of 8%) and the binder (weight concentration of 4%) were added to N-methylpyrrolidone (NMP) serving as a solvent, and stirred using a Disper at a rotational speed of 500 rpm for 1 hour. The obtained slurry was treated five times using a high pressure treatment device (Nanovater commercially available from Yoshida Kikai Co., Ltd) at a treatment pressure of 200 MPa and mixing was then performed. Thus, an inorganic heat-resistant layer agent in which the inorganic heat-resistant particles and the binder were uniformly dispersed was obtained.

(Production of organic-inorganic composite film)

The heat-resistant layer agent was applied to one surface of the base material film using a gravure coater. The weight per unit area of a heat-resistant layer was 3.5 g/m$^2$. The base material film to which the heat-resistant layer agent was applied was conveyed into a drying furnace at a temperature of 95 °C and the heat-resistant layer agent was dried and solidified. The thickness of the heat-resistant layer was 4.7 $\mu$m, and the thickness of the entire film was 24.7 $\mu$m. Thus, an organic-inorganic composite film was obtained.

(Evaluation by condition (A))

The density of the heat-resistant layer of the obtained organic-inorganic composite was 0.74 g/m$^2$/$\mu$m, and the above condition (A) was satisfied.

(Evaluation by condition (B))

A 2 cm (width direction) $\times$7 cm (length direction) small piece was cut out from the obtained organic-inorganic composite film. A 2 cm piece of a double-sided adhesive tape (PPS-10, width of 1 cm, commercially available from Sumitomo 3M) was attached to a heat-resistant layer of the above small piece. A 2 cm (width)$\times$7 cm (length) small piece of kraft paper was attached to a surface that was not adhered to the heat-resistant layer of the double-sided adhesive tape. The end of the organic composite film and the end of kraft paper were interposed between chucks of a tensile tester. The chucks were pulled apart at a tensile rate of 500 mm/min, and a maximum stress at which the heat-resistant layer and the base material film were separated at the interface was set as a peel strength b (N) between the base material film and the heat-resistant layer. In the obtained organic-inorganic composite film, b was 14.7 N. The obtained organic-inorganic composite film satisfied the above condition (B).

(Evaluation by condition (C))

The air permeability of the obtained organic-inorganic composite was 240 sec/100 ml. This value matched the air permeability of the base material film. Thus, the percentage change in air permeability c(%) under the above condition (C) was 0. The organic-inorganic composite film satisfied the condition (C).

(Evaluation of heat resistance)

The heat shrinkage ratio of the obtained organic-inorganic composite film was measured. A 7 cm$\times$7 cm square small piece was cut out from the obtained organic-inorganic composite film. On the surface of the small piece, three sets of a reference point set including two points separated by 2.5 cm in the length direction were set at arbitrary positions. Three sets were also set in the width direction in the same manner. The small piece to which no load was applied was left in a thermostatic chamber at 150 °C for 2 hours. Then, the distance between the two points of each of the reference point sets was measured. A heat shrinkage ratio (%) was calculated from a difference between the distance between two points before heating and the distance between two points after heating for the three sets of reference points in the length direction. An average value of the three sets was set as a heat shrinkage ratio (%) in the length direction. In the same manner, a heat shrinkage ratio (%) in the width direction was obtained from the three sets of reference points in the width direction. A larger ratio between the heat shrinkage ratio (%) in the length direction and the heat shrinkage ratio (%) in the width direction was set as a heat shrinkage ratio (%) at 150 °C of the organic-inorganic composite film. In this sample, the heat shrinkage ratio at 150 °C was 9%.

The density a of the heat-resistant layer of the condition (A), the peel strength b between the base material film and the heat-resistant layer of the condition (B), the percentage change in air permeability c of the condition (C), the heat resistance, and the like of the organic-inorganic composite of the organic-inorganic composite film obtained in Example 1 are shown in Table 1.

[Example 2]

(Production of base material film)

The stretching conditions of Example 1 were adjusted so that the thickness of the base material film was 21 $\mu$m.

(Preparation of heat-resistant layer agent)

A heat-resistant layer agent was prepared under the same conditions as in Example 1 except that boehmite (Taimei Chemicals Co., Ltd. C01, average particle size of 0.1 $\mu$m) was used as inorganic heat-resistant particles.

(Production of organic-inorganic composite film)

The heat-resistant layer agent was applied to one surface of the base material film using a gravure coater. The weight per unit area of the heat-resistant layer was 4.1 g/m$^2$. The base material film to which the heat-resistant layer agent was applied was conveyed into a drying furnace at a temperature of 95 °C and the heat-resistant layer agent was dried and solidified. The thickness of the heat-resistant layer was 3.2 $\mu$m, and the thickness of the entire film was 24.2 $\mu$m. Thus, an organic-inorganic composite film was obtained.

[Example 3]

(Production of base material film)

The stretching conditions of Example 1 were adjusted so that the thickness of the base material film was 21 $\mu$m.

(Preparation of heat-resistant layer agent)

Alumina (AEROXIDE AluC, average particle size of 0.1 $\mu$m) was used as inorganic heat-resistant particles and PVDF (Kyner HSV 500 commercially available from Arkema) was used as a binder. The inorganic heat-resistant particles (weight concentration of 9%) and the binder (weight concentration of 3%) were added to N-methylpyrrolidone (NMP) serving as a solvent, and stirred using a Disper at a rotational speed of 500 rpm for 1 hour, and then treated once at a treatment pressure of 200 MPa using the same high pressure treatment device as in Example 1 and mixing was then performed. Thus, an inorganic heat-resistant layer agent in which the inorganic heat-resistant particles and the binder were uniformly dispersed was obtained.

(Production of organic-inorganic composite film)

The heat-resistant layer agent was applied to one surface of the base material film using a gravure coater. The weight per unit area of the heat-resistant layer was 2.9 g/m$^2$. The base material film to which the heat-resistant layer agent was applied was conveyed into a drying furnace at a temperature of 95 °C, and the heat-resistant layer agent was dried and solidified. The thickness of the heat-resistant layer was 3.0 $\mu$m, and the thickness of the entire film was 24.0 $\mu$m. Thus, an organic-inorganic composite film was obtained.

[Example 4]

(Production of base material film)

The stretching conditions of Example 1 were adjusted so that the thickness of the base material film was 20.5 $\mu$m.

(Preparation of heat-resistant layer agent)

A heat-resistant layer agent was prepared in the same manner as in Example 3 except that alumina (AEROXIDE AluC, average particle size of 0.1 $\mu$m) was used as inorganic heat-resistant particles and PVDF (Kyner HSV 500 commercially available from Arkema) was used as a binder.

(Production of organic-inorganic composite film)

The heat-resistant layer agent was applied to one surface of the base material film using a gravure coater. The weight per unit area of the heat-resistant layer was 3.2 g/m$^2$. The base material film to which the heat-resistant layer agent was applied was conveyed into a drying furnace at a temperature of 95 °C, and the heat-resistant layer agent was dried and solidified. The thickness of the heat-resistant layer was 3.2 $\mu$m, and the thickness of the entire film was 23.7 $\mu$m. Thus, an organic-inorganic composite film was obtained.

[Example 5]

(Production of base material film)

The stretching conditions of Example 1 were adjusted so that the thickness of the base material film was 21 $\mu$m.

(Preparation of heat-resistant layer agent)

A heat-resistant layer agent was prepared under the same conditions as in Example 3 except that alumina (AEROXIDE Alu65, average particle size of 0.1 $\mu$m) was used as inorganic heat-resistant particles, PVDF (Kyner HSV 500 commercially available from Arkema) was used as a binder, and a treatment was performed once at a treatment pressure of 170 MPa using a high pressure treatment device and mixing was then performed.

(Production of organic-inorganic composite film)

The heat-resistant layer agent was applied to one surface of the base material film using a gravure coater. The weight per unit area of a heat-resistant layer was 3.0 g/m$^2$. The base material film to which the heat-resistant layer agent was applied was conveyed into a drying furnace at a temperature of 95 °C, and the heat-resistant layer agent was dried and solidified. The thickness of the heat-resistant layer was 3.0 $\mu$m, and the thickness of the entire film was 24.0 $\mu$m. Thus, an organic-inorganic composite film was obtained.

[Comparative Example 1]

(Production of base material film)

The stretching conditions of Example 1 were adjusted so that the thickness of the base material film was 16 $\mu$m.

(Preparation of heat-resistant layer agent)

Boehmite (C06 commercially available from Taimei Chemicals Co., Ltd. average particle size of 0.8 $\mu$m) was used as inorganic heat-resistant particles and a vinylidene fluoride homopolymer product (Kyner HSV 500 commercially available from Arkema) was used as a binder. A heat-resistant layer agent was prepared under the same conditions as in Example 1 except that inorganic heat-resistant particles (weight concentration of 9.6%) and a binder (weight concentration of 2.4%) were added to N-methylpyrrolidone (NMP) serving as a solvent, stirred using a Disper at a rotational speed of 500 rpm for 1 hour, and then treated three times at a treatment pressure of 200 MPa using a high pressure treatment device and mixing was then performed.

(Production of organic-inorganic composite film)

The heat-resistant layer agent was applied to one surface of the base material film using a gravure coater. The weight per unit area of a heat-resistant layer was 3.8 g/m$^2$. The base material film to which the heat-resistant layer agent was applied was conveyed into a drying furnace at a temperature of 95 °C, and the heat-resistant layer agent was dried and solidified. The thickness of the heat-resistant layer was 2.5 $\mu$m, and the thickness of the entire film was 18.5 $\mu$m. Thus, an organic-inorganic composite film was obtained.

[Comparative Example 2]

(Production of base material film)

The stretching conditions of Example 1 were adjusted so that the thickness of the base material film was 21 μm.

(Preparation of heat-resistant layer agent)

Alumina (AKP-3000, average particle size of 0.3 μm) was used as inorganic heat-resistant particles and PDVF (Kyner HSV 500 commercially available from Arkema) was used as a binder. A heat-resistant layer agent was prepared under the same conditions as in Example 1 except that the weight concentration of the inorganic heat-resistant particles was 9%, the weight concentration of the binder was 3%, and the conditions of a high pressure treatment device included a treatment once at a treatment pressure of 200 MPa.

(Production of organic-inorganic composite film)

The heat-resistant layer agent was applied to one surface of the base material film using a gravure coater. The weight per unit area of a heat-resistant layer was 5.5 g/m$^2$. The base material film to which the heat-resistant layer agent was applied was conveyed into a drying furnace at a temperature of 95 °C, and the heat-resistant layer agent was dried and solidified. The thickness of the heat-resistant layer was 3.7 μm, and the thickness of the entire film was 24.7 μm. Thus, an organic-inorganic composite film was obtained.

[Comparative Example 3]

(Production of base material film)

The stretching conditions of Example 1 were adjusted so that the thickness of the base material film was 21 μm.

(Preparation of heat-resistant layer agent)

A heat-resistant layer agent was prepared under the same conditions as in Comparative Example 2 except that alumina (AKP-3000, average particle size of 0.3 μm) was used as inorganic heat-resistant particles and a commercially available PVDF (trade name "S6-226") was used as a binder.

(Production of organic-inorganic composite film)

The heat-resistant layer agent was applied to one surface of the base material film using a gravure coater. The weight per unit area of a heat-resistant layer was 3.3 g/m$^2$. The base material film to which the heat-resistant layer agent was applied was conveyed into a drying furnace at a temperature of 95 °C, and the heat-resistant layer agent was dried and solidified. The thickness of the heat-resistant layer was 1.6 μm, and the thickness of the entire film was 22.6 μm. Thus, an organic-inorganic composite film was obtained.

[Comparative Example 4]

(Production of base material film)

The stretching conditions of Example 1 were adjusted so that the thickness of the base material film was 21 μm.

(Preparation of heat-resistant layer agent)

A heat-resistant layer agent was prepared under the same conditions as in Example 1 except that alumina (a minimum particle size of 0.3 μm and a maximum particle size of 0.5 μm) was used as inorganic heat-resistant particles and an acrylic commercial product was used as a binder.

(Production of organic-inorganic composite film)

The heat-resistant layer agent was applied to one surface of the base material film using a gravure coater. The weight per unit area of a heat-resistant layer was 6.7 g/m$^2$. The base material film to which the heat-resistant layer agent was applied was conveyed into a drying furnace at a temperature of 95 °C and the heat-resistant layer agent was dried and solidified. The thickness of the heat-resistant layer was 2.8 $\mu$m, and the thickness of the entire film was 23.8 $\mu$m. Thus, an organic-inorganic composite film was obtained.

[Comparative Example 5]

(Production of base material film)

The stretching conditions of Example 1 were adjusted so that the thickness of the base material film was 21 $\mu$m.

(Preparation of heat-resistant layer agent)

A heat-resistant layer agent was prepared under the same conditions as in Example 1 except that alumina (a minimum particle size of 0.3 $\mu$m and a maximum particle size of 0.6 $\mu$m) was used as inorganic heat-resistant particles and an acrylic commercial product was used as a binder.

(Production of organic-inorganic composite film)

The heat-resistant layer agent was applied to one surface of the base material film using a gravure coater. The weight per unit area of a heat-resistant layer was 5.7 g/m$^2$. The base material film to which the heat-resistant layer agent was applied was conveyed into a drying furnace at a temperature of 95 °C, and the heat-resistant layer agent was dried and solidified. The thickness of the heat-resistant layer was 2.8 $\mu$m, and the thickness of the entire film was 23.8 $\mu$m. Thus, an organic-inorganic composite film was obtained.

The density a of the heat-resistant layer of the condition (A), the peel strength b between the base material film and the heat-resistant layer of the condition (B), and the percentage change in air permeability c of the condition (C), the heat resistance and the like of the organic-inorganic composites obtained in Examples 2 to 5 and Comparative Examples 1 to 5 were measured under the same conditions as in Example 1. The results are shown in Table 1.

[Table 1]

| | Heat-resistant layer agent | | | | Heat-resistant layer | | Base material | | Organic-inorganic composite film | | | | Condition (C) percentage change in air permeability (%) \|X-Y\|/X×100 |
|---|---|---|---|---|---|---|---|---|---|---|---|---|---|
| | Inorganic heat-resistant particles | | | Binder | Thickness (μm) | Condition (A) density (g/m²/μm) | Formed of polypropylene | | Thickness (μm) | Air permeability (sec/100 ml) Y | Heat resistance (150 °C heat shrinkage ratio) (%) | Condition (B) peel strength (N) | |
| | Type | Product | Particle size (μm) | | | | Film thickness (μm) | Air permeability (sec/100 ml) X | | | | | |
| Example 1 | Silica | AEROSIL MOX80 | Average 0.1 | co-PVDF | 4.7 | 0.74 | 20.0 | 240 | 24.7 | 240 | 9 | 14.7 | 0 |
| Example 2 | Boehmite | Taimei Chemicals CO1 | Average 0.1 | co-PVDF | 3.2 | 1.28 | 21.0 | 150 | 24.2 | 180 | 7 | 34.3 | 20 |
| Example 3 | Alumina | AEROXIDE AluC | Average 0.1 | PVDF | 3.0 | 0.97 | 21.0 | 150 | 24.0 | 140 | 7 | 37.24 | 7 |
| Example 4 | Alumina | AEROXIDE AluC | Average 0.1 | PVDF | 3.2 | 1.00 | 20.5 | 220 | 23.7 | 220 | 9 | 30.38 | 0 |
| Example 5 | Alumina | AEROXIDE Alu65 | Average 0.1 | PVDF | 3.0 | 1.00 | 21.0 | 150 | 24.0 | 140 | 7 | 35.28 | 7 |
| Comparative Example 1 | Boehmite | Taimei Chemicals C06 | Average 0.8 | PVDF | 2.5 | 1.52 | 16.0 | 140 | 18.5 | 200 | 18 | 12.74 | 43 |
| Comparative Example 2 | Alumina | AKP-3000 | Average 0.3 | PVDF | 3.7 | 1.49 | 21.0 | 150 | 24.7 | 130 | 19 | 0.98 | 13 |
| Comparative Example 3 | Alumina | AKP-3000 | Average 0.3 | PVDF | 1.6 | 2.06 | 21.0 | 150 | 22.6 | 130 | 12 | 9.8 | 13 |
| Comparative Example 4 | Alumina | - | 0.3 to 0.5 | Acrylic resin | 2.8 | 2.39 | 21.0 | 150 | 23.8 | 170 | 2 | 16.66 | 13 |
| Comparative Example 5 | Alumina | - | 0.3 to 0.6 | Acrylic resin | 2.8 | 2.04 | 21.0 | 150 | 23.8 | 150 | 7 | 20.58 | 0 |

The organic-inorganic composite films obtained in Examples 1 to 5 satisfied three conditions including the condition (A): lightweight, the condition (B): high adhesion between the base material film and the heat-resistant layer, and the condition (C): small change in air permeability of the base material film. In addition, the organic-inorganic composite films obtained in Examples 1 to 5 had the heat resistance required for a separator material. On the other hand, the organic-inorganic composite films obtained in Comparative Examples 1 to 5 had poor balance between the above conditions (A), (B), and (C). Heat resistance, which is a basic property required for a separator material, was low in Comparative Examples 1, 2, and 3.

[Industrial Applicability]

It can be understood that the organic-inorganic composite film successfully selectively produced in the present invention, as a result, maintains the heat resistance required for a separator material, and also has all properties including lightweightness, favorable adhesion between the base material film and the heat-resistant layer, and maintaining micropore characteristics of the base material film which have been required for a separator material in recent years. Such an organic-inorganic composite film of the present invention is particularly useful as a separator material.

**Claims**

1. An organic-inorganic composite film in which a heat-resistant layer containing inorganic heat-resistant particles and a binder is provided on at least one surface of a base material film formed of a polyolefin microporous film and which satisfies all of the following conditions (A), (B), and (C),
   condition (A): $a \leq 1.5$
   (in the relation, a denotes a density of the heat-resistant layer and is represented by a weight per volume ($g/m^2/\mu m$) of the heat-resistant layer with an area of 1 $m^2$ and a thickness of 1 $\mu m$);
   condition (B): $12.74 \leq b$
   (in the relation, b denotes a peel strength (N) between the base material film and the heat-resistant layer obtained by the following measurement method,
   the method of measuring the peel strength b: the following procedures (1), (2), (3), and (4) are performed in this order,

   (1) a double-sided adhesive tape is attached to the heat-resistant layer of the organic-inorganic composite film,
   (2) kraft paper is attached to a surface that is not adhered to the heat-resistant layer of the double-sided adhesive tape,
   (3) ends of the organic-inorganic composite film and the kraft paper are interposed between chucks of a tensile tester,
   (4) the chucks of the tensile tester are pulled apart at a tensile rate of 500 mm/min and a maximum stress (N) when the heat-resistant layer and the base material film are separated at the interface is set as the peel strength b);

   condition (C): $c \leq 20$
   (in the relation, c denotes a percentage change in air permeability (%) obtained by the following formula:

$$\text{percentage change in air permeability } (\%) = |(\text{air permeability of the organic-inorganic composite film}) - (\text{air permeability of the base material film})| \div (\text{air permeability of the base material film}) \times 100.$$

2. The organic-inorganic composite film according to claim 1,
   wherein the polyolefin microporous film is a polymer obtained by polymerizing monomers including olefins as a main constituent.

3. The organic-inorganic composite film according to claim 2,
   wherein the polymer obtained by polymerizing monomers including olefins as a main constituent is a propylene homopolymerization or a polymer which is obtained by copolymerizing propylene and at least one selected from among ethylene and $\alpha$-olefins having 4 to 8 carbon atoms and which includes propylene as a main component.

4.  The organic-inorganic composite film according to any one of claims 1 to 3, wherein the inorganic heat-resistant particles are an inorganic filler having an average particle size of 0.2 μm or less.

5.  The organic-inorganic composite film according to claim 4,
    wherein the inorganic filler is at least one selected from among silica, boehmite, and alumina.

6.  The organic-inorganic composite film according to any one of claims 1 to 5, wherein the binder is a fluorine-containing resin.

7.  A method of producing the organic-inorganic composite film according to any one of claims 1 to 6, comprising a process of applying a heat-resistant layer agent containing the inorganic heat-resistant particles and the binder to at least one surface of the base material film formed of the polyolefin microporous film and then drying and solidifying the heat-resistant layer.

8.  A multilayer heat-resistant separator material including the organic-inorganic composite film according to any one of claims 1 to 6.

## INTERNATIONAL SEARCH REPORT

| International application No. |
|---|
| PCT/JP2016/057223 |

| A. CLASSIFICATION OF SUBJECT MATTER |
|---|
| B32B9/00(2006.01)i, B32B5/22(2006.01)i, H01M2/16(2006.01)i |

According to International Patent Classification (IPC) or to both national classification and IPC

| B. FIELDS SEARCHED |
|---|

Minimum documentation searched (classification system followed by classification symbols)
B32B1/00-43/00, H01M2/14-2/18

Documentation searched other than minimum documentation to the extent that such documents are included in the fields searched

| Jitsuyo Shinan Koho | 1922-1996 | Jitsuyo Shinan Toroku Koho | 1996-2016 |
|---|---|---|---|
| Kokai Jitsuyo Shinan Koho | 1971-2016 | Toroku Jitsuyo Shinan Koho | 1994-2016 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X | WO 2014/030507 A1 (JNC Corp.),<br>27 February 2014 (27.02.2014),<br>claims; paragraphs [0015] to [0016], [0023],<br>[0028], [0039], [0051]; tables 1, 2, examples 1<br>to 6; paragraph [0072]<br>& US 2015/0221917 A1<br>claims; paragraphs [0026] to [0027], [0034],<br>[0039], [0050], [0065]; examples 1 to 6 on<br>tables 1, 2; paragraph [0084]<br>& EP 2889134 A1 & KR 10-2015-0046127 A<br>& CN 104582949 A & TW 201412384 A | 1-8 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02 June 2016 (02.06.16) | 14 June 2016 (14.06.16) |

| Name and mailing address of the ISA/<br>Japan Patent Office<br>3-4-3,Kasumigaseki,Chiyoda-ku,<br>Tokyo 100-8915,Japan | Authorized officer |
|---|---|
| | Telephone No. |

Form PCT/ISA/210 (second sheet) (January 2015)

**INTERNATIONAL SEARCH REPORT**

International application No.

PCT/JP2016/057223

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | WO 2014/132791 A1 (Toray Battery Separator Film Co., Ltd.),<br>04 September 2014 (04.09.2014),<br>claims; paragraphs [0027], [0032], [0037] to [0038], [0072], [0087], [0093]; table 1<br>& US 2016/0013461 A1<br>claims; paragraphs [0034], [0040], [0046] to [0047], [0096], [0112], [0119] to [0124]; table 1<br>& EP 2963083 A1       & KR 10-2015-0122193 A<br>& CN 105121531 A | 1-8<br>1-8 |
| Y | JP 2013-14017 A (Sumitomo Chemical Co., Ltd.),<br>24 January 2013 (24.01.2013),<br>claims; paragraphs [0030] to [0032], [0034]<br>(Family: none) | 1-8 |
| A | WO 2013/119056 A1 (SK INNOVATION CO., LTD.),<br>15 August 2013 (15.08.2013),<br>claims; paragraph [0102]; table 2<br>& JP 2015-514812 A      & US 2015/0004467 A1<br>& EP 2812384 A1       & KR 10-2013-0091459 A<br>& CN 104114623 A      & TW 201343404 A | 1-8 |
| A | JP 2014-40580 A (Sumitomo Chemical Co., Ltd.),<br>06 March 2014 (06.03.2014),<br>examples 3, 4<br>(Family: none) | 1-8 |
| A | JP 2013-12351 A (Nissan Motor Co., Ltd.),<br>17 January 2013 (17.01.2013),<br>claims; paragraphs [0027], [0030], [0033]; fig. 4<br>& US 2014/0113173 A1<br>claims; paragraphs [0030], [0032], [0039]; fig. 4<br>& WO 2013/002116 A       & EP 2728645 A1<br>& TW 201300231 A       & CN 103620818 A<br>& KR 10-2014-0043444 A  & MX 2013015402 A<br>& RU 2014102600 A | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014030507 PCT
- WO 2012124093 PCT
- JP 2013163806 A
- WO 2012029699 PCT
- JP 2013014017 A